# EUROPEAN PATENT APPLICATION

(11) **EP 4 550 114 A1**
(43) Date of publication of application: **07.05.2025**
(21) Application number: 23845165.2
(22) Date of filing: 26.06.2023
(51) Int. Cl.: G06F 8/20

(54) **SHARING METHOD AND DEVICE**

(30) Priority: 28.07.2022 CN 202210901542; 06.09.2022 CN 202211083725
(71) Applicant: Huawei Cloud Computing Technologies Co., Ltd., Guiyang, Guizhou 550025 (CN)
(72) Inventor: WANG, Yifan, Guiyang, Guizhou 550025 (CN); LIANG, Guangtai, Guiyang, Guizhou 550025 (CN)
(74) Representative: Maiwald GmbH
(86) International application number: PCT/CN2023/102351
(87) International publication number: WO 2024/021952

(57) **Abstract**

A sharing method and apparatus are provided. The sharing method is applicable to an IDE architecture. The IDE architecture includes a sharing apparatus, a first plugin, and a second plugin. The sharing apparatus is configured to perform the sharing method. The sharing apparatus stores M pieces of knowledge data provided by the first plugin, where M is a positive integer. The sharing apparatus receives a data obtaining request from the second plugin. The sharing apparatus searches the M pieces of knowledge data for target knowledge data based on the data obtaining request, and sends the target knowledge data to the second plugin.

## Description

### CROSS-REFERENCE TO RELATED APPLICATIONS

This application claims priority to Chinese Patent Application No. 202210901542.0, filed with the China National Intellectual Property Administration on July 28, 2022 and entitled "PLUGIN BASE FRAMEWORK FOR INTEGRATED DEVELOPMENT ENVIRONMENT", which is incorporated herein by reference in its entirety; and this application claims priority to Chinese Patent Application No. 202211083725.2, filed with the China National Intellectual Property Administration on September 6, 2022 and entitled "SHARING METHOD AND APPARATUS", which is incorporated herein by reference in its entirety.

### TECHNICAL FIELD

This application relates to the field of computer technologies, and in particular, to a sharing method and apparatus.

### BACKGROUND

Modern program development basically depends on an integrated development environment (integrated development environment, IDE) architecture. Currently, there are many types of IDEs in the industry, and they focus on different functions. All mainstream IDE technical architectures in the industry achieve architectural separation. That is, a core (core) is separated from a plugin (plugin). The core is mainly responsible for isolation of an operating system, and the plugin is responsible for isolation of functions.

The IDE architecture includes a plurality of code analysis plugins, for example, language service plugins such as code jump, code completion, and code generation plugins. In the IDE architecture, the plurality of plugins are isolated from each other. Some plugins may need to have the same capability or even perform the same operation, which wastes resources.

### SUMMARY

This application provides a sharing method and apparatus, to resolve a resource waste problem in an IDE architecture.

According to a first aspect, this application provides a sharing method, applicable to an IDE architecture. The IDE architecture includes a sharing apparatus, a first plugin, and a second plugin. The sharing method is performed by the sharing apparatus.

The sharing apparatus stores M pieces of knowledge data provided by the first plugin, where M is a positive integer. The method includes: The sharing apparatus receives a data obtaining request from the second plugin. The sharing apparatus searches the M pieces of knowledge data for target knowledge data based on the data obtaining request. The sharing apparatus sends the target knowledge data to the second plugin.

In the foregoing technical solution, the sharing apparatus stores the M pieces of knowledge data provided by the first plugin. When the second plugin needs to use a specific piece of knowledge data (namely, the target knowledge data) in the M pieces of knowledge data, the second plugin may directly request the target knowledge data from the sharing apparatus instead of analyzing a code file to obtain the target knowledge data. This helps to save computing resources.

In a possible implementation, before the sharing apparatus receives the data obtaining request from the second plugin, the method further includes: The sharing apparatus receives a data registration request from the first plugin, where the data registration request includes identifiers of the M pieces of knowledge data. The sharing apparatus records the identifiers of the M pieces of knowledge data.

In the foregoing technical solution, the first plugin may first register the identifiers of the M pieces of knowledge data with the sharing apparatus, so that the sharing apparatus can determine whether the target knowledge data requested by the data obtaining request exists in the current sharing apparatus.

In a possible implementation, after recording the identifiers of the M pieces of knowledge data, the sharing apparatus further obtains the M pieces of knowledge data from the first plugin, and stores the M pieces of knowledge data. The M pieces of knowledge data are obtained by the first plugin by analyzing a code file in a workspace, or the M pieces of knowledge data are obtained by the first plugin by analyzing basic data. The basic data is obtained by the sharing apparatus by analyzing a code file in the workspace. The first plugin and the second plugin jointly act on the workspace. The basic data is one or more of an abstract syntax tree and a token (token) sequence. The M pieces of knowledge data include one or more of a code index, a static single-assignment, a control flow graph, or a program dependence graph.

In the foregoing technical solution, the sharing apparatus synchronizes the M pieces of knowledge data from the first plugin, so that the sharing apparatus can find, from the M pieces of knowledge data stored in the sharing apparatus, the target knowledge data requested by the data obtaining request.

In a possible implementation, after storing the M pieces of knowledge data, the sharing apparatus further obtains change information of M' pieces of knowledge data from the first plugin, and updates the M' pieces of knowledge data in the M pieces of knowledge data based on the change information of the M' pieces of knowledge data. The change information of the M' pieces of knowledge data is obtained by the first plugin by performing incremental analysis based on change information of the code file in the workspace, or the change information of the M' pieces of knowledge data is obtained by the first plugin by performing incremental analysis based on change information of the basic data. The change information of the basic data is obtained by the sharing apparatus by performing incremental analysis based on change information of the code file in the workspace.

In the foregoing technical solution, the sharing apparatus can further obtain change information of knowledge data from the first plugin, and update corresponding local knowledge data based on the change information of the knowledge data, to ensure that the knowledge data stored in the sharing apparatus is the same as the knowledge data analyzed by the first plugin, that is, to ensure that the knowledge data stored in the sharing apparatus is latest knowledge data.

In a possible implementation, after sending the target knowledge data to the second plugin, the sharing apparatus further receives a subscription request from the second plugin for the target knowledge data. The subscription request is for obtaining change information of the target knowledge data. After receiving the change information of the target knowledge data from the first plugin, the sharing apparatus further sends the change information of the target knowledge data to the second plugin.

In the foregoing technical solution, when determining that the target knowledge data is changed, the sharing apparatus further sends the change information of the target knowledge data to the second plugin, to ensure that the target knowledge data obtained by the second plugin is latest knowledge data.

In a possible implementation, the sharing apparatus stores m pieces of knowledge data provided by a production plugin. The production plugin includes the first plugin, and m is a positive integer. In a process of developing, by a user, a third plugin, the sharing apparatus further sends description information of the m pieces of knowledge data to a front-end module, to enable the user to select, from the m pieces of knowledge data based on the description information of the m pieces of knowledge data displayed by the front-end module, knowledge data that is obtainable by the third plugin from the sharing apparatus.

In the foregoing technical solution, the sharing apparatus displays, in the front-end module, the description information of the m pieces of knowledge data stored in the sharing apparatus. In the process of developing the third plugin, the user can learn of which knowledge data can be directly obtained from the sharing apparatus, and therefore, sets the third plugin to request the knowledge data from the sharing apparatus without analyzing the code file again. This prevents a plurality of plugins from analyzing the code file repeatedly, and helps to save computing resources.

According to a second aspect, this application provides a sharing method, applicable to an IDE architecture. The IDE architecture includes a sharing apparatus, a first plugin, and a second plugin. The sharing method is performed by the sharing apparatus.

N services provided by the first plugin are registered in the sharing apparatus, where N is a positive integer. The method includes: The sharing apparatus receives a service calling request from the second plugin. The sharing apparatus calls a target service in the N services based on the service calling request. The sharing apparatus receives an operation result obtained by the first plugin by providing the target service, and sends the operation result to the second plugin.

In the foregoing technical solution, the N services provided by the first plugin are registered in the sharing apparatus. When the second plugin needs to use a specific service (namely, the target service) in the N services, the second plugin may directly request the sharing apparatus to call the target service without implementing the target service in the second plugin. This helps to save computing resources.

In a possible implementation, the first plugin and the second plugin act on a same workspace, and the operation result is obtained by the first plugin by providing the target service to the workspace.

In a possible implementation, before receiving the service calling request from the second plugin, the sharing apparatus further receives a service registration request from the first plugin. The service registration request includes first interface addresses of the N services, and the first interface addresses of the services are used by the sharing apparatus to call the services. The sharing apparatus generates second interface addresses of the N services based on the first interface addresses of the N services. The second interface addresses of the services are used by the second plugin to call the services. The sharing apparatus records the first interface addresses and the second interface addresses of the N services.

In the foregoing technical solution, the first plugin may first register the first interface addresses of the N services with the sharing apparatus, so that the sharing apparatus can determine whether the current sharing apparatus provides the target service requested by the service calling request.

In a possible implementation, after the recording the first interface addresses and the second interface addresses of the N services, the sharing apparatus further receives a service query request from the second plugin. The service query request includes an identifier of the target service. The N services include the target service. The sharing apparatus sends a second interface address of the target service to the second plugin. Correspondingly, that the sharing apparatus calls the target service in the N services based on the service calling request may be specifically: The sharing apparatus determines a first interface address of the target service based on the second interface address of the target service in the service calling request. The sharing apparatus calls the target service based on the first interface address of the target service.

In the foregoing technical solution, the sharing apparatus sends the second interface address of the target service to the second plugin, so that when needing to request to call the target service, the second plugin sends the service calling request including the second interface address of the target service to the sharing apparatus, and the sharing apparatus calls the target service based on the second interface address of the target service in the service calling request and based on the first interface address of the target service.

In a possible implementation, n services provided by a production plugin are registered in the sharing apparatus, where the production plugin includes the first plugin, and n is a positive integer; and in a process of developing, by a user, a third plugin, the method further includes: The sharing apparatus sends description information of the n services to a front-end module, to enable the user to select, from the n services based on the description information of the n services displayed by the front-end module, a service that is callable by the third plugin from the sharing apparatus.

In the foregoing technical solution, the sharing apparatus displays, in the front-end module, the description information of the n services registered in the sharing apparatus. In the process of developing the third plugin, the user can learn of calling of which services can be directly requested from the sharing apparatus, and therefore, sets the third plugin to request, from the sharing apparatus, calling of the service without implementing the service in the third plugin. This prevents a plurality of plugins from implementing the same service, and helps to save computing resources.

According to a third aspect, this application provides a sharing apparatus, applicable to an IDE architecture. The IDE architecture includes the apparatus, a first plugin, and a second plugin. The apparatus stores M pieces of knowledge data provided by the first plugin, where M is a positive integer.

The apparatus includes:
a data query module, configured to receive a data obtaining request from the second plugin, and search the M pieces of knowledge data for target knowledge data based on the data obtaining request; and
a data download module, configured to send the target knowledge data to the second plugin.

In a possible implementation, the apparatus further includes a data registration module. Before the data query module receives the data obtaining request from the second plugin, the data registration module is configured to receive a data registration request from the first plugin, where the data registration request includes identifiers of the M pieces of knowledge data; and record the identifiers of the M pieces of knowledge data.

In a possible implementation, the apparatus further includes a data upload module. After the data registration module records the identifiers of the M pieces of knowledge data, the data upload module is configured to obtain the M pieces of knowledge data from the first plugin, and store the M pieces of knowledge data. The M pieces of knowledge data are obtained by the first plugin by analyzing a code file in a workspace, or the M pieces of knowledge data are obtained by the first plugin by analyzing basic data. The basic data is obtained by the apparatus by analyzing a code file in the workspace. The first plugin and the second plugin jointly act on the workspace. The basic data is one or more of an abstract syntax tree and a token sequence. The M pieces of knowledge data include one or more of a code index, a static single-assignment, a control flow graph, or a program dependence graph.

In a possible implementation, after storing the M pieces of knowledge data, the data upload module is further configured to: obtain change information of M' pieces of knowledge data from the first plugin; and update the M' pieces of knowledge data in the M pieces of knowledge data based on the change information of the M' pieces of knowledge data. The change information of the M' pieces of knowledge data is obtained by the first plugin by performing incremental analysis based on change information of the code file in the workspace, or the change information of the M' pieces of knowledge data is obtained by the first plugin by performing incremental analysis based on change information of the basic data. The change information of the basic data is obtained by the apparatus by performing incremental analysis based on change information of the code file in the workspace.

In a possible implementation, after sending the target knowledge data to the second plugin, the data download module is further configured to receive a subscription request from the second plugin for the target knowledge data, where the subscription request is for obtaining change information of the target knowledge data by the second plugin. Correspondingly, after the data upload module receives the change information of the target knowledge data from the first plugin, the data download module is further configured to send the change information of the target knowledge data to the second plugin.

In a possible implementation, the apparatus stores m pieces of knowledge data provided by a production plugin. The production plugin includes the first plugin, and m is a positive integer. In a process of developing, by a user, a third plugin, the data query module is further configured to send description information of the m pieces of knowledge data to a front-end module, to enable the user to select, from the m pieces of knowledge data based on the description information of the m pieces of knowledge data displayed by the front-end module, knowledge data that is obtainable by the third plugin from the apparatus.

According to a fourth aspect, this application provides a sharing apparatus, applicable to an IDE architecture. The IDE architecture includes the apparatus, a first plugin, and a second plugin. The apparatus includes:
a service registration module, configured to register N services provided by the first plugin, where N is a positive integer; and
a service calling module, configured to receive a service calling request from the second plugin, call a target service in the N services based on the service calling request, receive an operation result obtained by the first plugin by providing the target service, and send the operation result to the second plugin.

In a possible implementation, the first plugin and the second plugin act on a same workspace, and the operation result is obtained by the first plugin by providing the target service to the workspace.

In a possible implementation, before the service calling module receives the service calling request from the second plugin, the service registration module is configured to: receive a service registration request from the first plugin, where the service registration request includes first interface addresses of the N services, and the first interface addresses of the services are used by the apparatus to call the services; generate second interface addresses of the N services based on the first interface addresses of the N services, where the second interface addresses of the services are used by the second plugin to call the services; and record the first interface addresses and the second interface addresses of the N services.

In a possible implementation,d further includes a service discovery module, where after the service registration module records the first interface addresses and the second interface addresses of the N services, the service discovery module is configured to: receive a service query request from the second plugin, where the service query request includes an identifier of the target service and the N services include the target service; and send a second interface address of the target service to the second plugin.

In a possible implementation, when calling the target service in the N services based on the service calling request, the service calling module is specifically configured to: determine a first interface address of the target service based on the second interface address of the target service in the service calling request; and call the target service based on the first interface address of the target service.

In a possible implementation, n services provided by a production plugin are registered in the service registration module. The production plugin includes the first plugin, and n is a positive integer. The apparatus further includes the service discovery module. In a process of developing, by a user, a third plugin, the service discovery module is configured to send description information of the n services to a front-end module, to enable the user to select, from the n services based on the description information of the n services displayed by the front-end module, a service that is callable by the third plugin from the apparatus.

According to a fifth aspect, this application provides a computing device cluster, including at least one computing device. Each computing device includes a processor and a memory. The processor of the at least one computing device is configured to execute instructions stored in the memory of the at least one computing device, to enable the computing device cluster to perform the method in the first aspect or any possible implementation of the first aspect or perform the method in the second aspect or any possible implementation of the second aspect.

According to a sixth aspect, this application provides a computer program product, including instructions. When the instructions are run by a computing device cluster, the computing device cluster is enabled to perform the method in the first aspect or any possible implementation of the first aspect or perform the method in the second aspect or any possible implementation of the second aspect.

According to a seventh aspect, this application provides a computer-readable storage medium, including computer program instructions. When the computer program instructions are executed by a computing device cluster, the computing device cluster performs the method in the first aspect or any possible implementation of the first aspect or performs the method in the second aspect or any possible implementation of the second aspect.

According to an eighth aspect, this application provides a sharing system, including the apparatus in the third aspect or any possible implementation of the third aspect, and the apparatus in the fourth aspect or any possible implementation of the fourth aspect.

For technical effects that can be achieved in any one of the third aspect to the eighth aspect, refer to descriptions of beneficial effects in the first aspect or the second aspect. Details are not described herein again.

### BRIEF DESCRIPTION OF DRAWINGS

FIG. 1 shows a process of analyzing code by a language server;
FIG. 2 is a diagram of an IDE architecture;
FIG. 3 is a diagram of an IDE architecture according to this application;
FIG. 4 is a schematic flowchart of providing knowledge data for a sharing apparatus by a first plugin according to this application;
FIG. 5 is a diagram of a data registry according to this application;
FIG. 6 is a diagram of a code file and a control flow graph according to this application;
FIG. 7 is a diagram of another code file and another control flow graph according to this application;
FIG. 8 is a schematic flowchart of requesting knowledge data from a sharing apparatus by a second plugin according to this application;
FIG. 9 is an interaction diagram of creative commons according to this application;
FIG. 10 is another interaction diagram of creative commons according to this application;
FIG. 11 is a schematic flowchart of providing a service for a sharing apparatus by a first plugin according to this application;
FIG. 12 is a diagram of a service registry according to this application;
FIG. 13 is a schematic flowchart of requesting a service from a sharing apparatus by a second plugin according to this application;
FIG. 14 is an interaction diagram of service sharing according to this application;
FIG. 15 is another interaction diagram of service sharing according to this application;
FIG. 16 is a diagram of a structure of a knowledge data sharing apparatus according to this application;
FIG. 17 is a diagram of a structure of a service sharing apparatus according to this application;
FIG. 18 is a diagram of a structure of a sharing system according to this application;
FIG. 19 is a diagram of a structure of a computing device according to this application; and
FIG. 20 is a diagram of a structure of a computing device cluster according to this application.

### DESCRIPTION OF EMBODIMENTS

To better explain embodiments of this application, related terms or technologies in this application are first explained as follows:
1. Integrated development environment (integrated development environment, IDE): The integrated development environment is a type of application software that assists programmers in software development, usually includes functions such as a language editor and an automatic build tool, and is a development tool.

An IDE architecture is usually divided into a core layer and a plugin layer. The core layer is responsible for calling underlying instructions of an operating system and implementing some basic public capabilities such as an environment service and a file system service. The plugin layer calls and orchestrates the basic public capabilities through an application programming interface (application programming interface, API) of the core layer, to implement corresponding plugin functions such as a code definition jump and a reference search.
2. Plugin: The plugin is a program written through an application programming interface according to a preset specification. The plugin can be run only on a system platform specified by a program, and cannot be run independently of the specified system platform.
3. Language server protocol (language server protocol, LSP): The language server protocol is a protocol that both the IDE and a language server (language server) need to comply with as two communication parties.

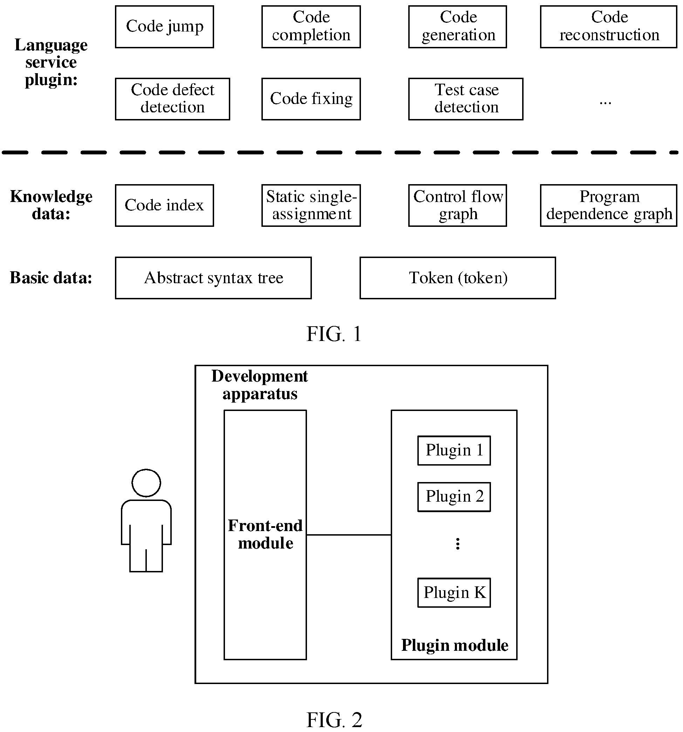

FIG. 1 shows an example of a process of analyzing code by a language server. The language server can provide language service plugins such as code jump, code completion, code generation, code reconstruction, code defect detection, code fixing, and test case detection plugins. All the plugins need to analyze code and extract knowledge data corresponding to the code. Specifically, each plugin generates a token (token) by performing lexical analysis on the code, and then generates an abstract syntax tree (abstract syntax tree, AST) by performing syntax analysis on the code. The token and the abstract syntax tree may be used as basic data of the code. Subsequently, each plugin extracts knowledge data of the code based on the abstract syntax tree and the token. The knowledge data is, for example, a code index, a static single-assignment (static single-assignment, SSA), a control flow graph (control flow graph, CFG), and a program dependence graph (PDG).
4. Workspace (workspace): The workspace includes the following resources: a project, a file, and a folder. The workspace has a clear hierarchy. The project is at the highest level. The project includes the file and the folder. The plugin can manage a resource of the workspace through the API provided by the core layer of the IDE. A user can open a workspace when starting a project.
5. File: The file is a file (which may also be referred to as a code file) including software code. Using Java as an example, a file name extension of the file is java. Using C++ as an example, a file name extension of the file is .cpp.

The following describes in detail embodiments of this application with reference to accompanying drawings.

For example, FIG. 2 is a diagram of an IDE architecture. The IDE architecture may be deployed in a development apparatus. The development apparatus is included in a terminal device (like a computer). The development apparatus may include a plugin module and a front-end module. The plugin module includes K plugins, where K is an integer greater than 1. The plugins are, for example, language service plugins, and the plugin may be configured to develop an application. The front-end module is configured to interact with a user.

For example, the user performs an operation in the front-end module, for example, opens a workspace for developing an application, or performs code editing on a code file in the workspace that has been opened. Correspondingly, the front-end module generates a user interaction event based on the operation performed by the user, and sends the user interaction event to the plugin module.

For example, when the user opens a workspace in the front-end module, a user interaction event generated by the front-end module indicates the workspace opened by the user. Correspondingly, the plugin module loads K plugins acting on the workspace. Each of the K plugins analyzes a code file in the workspace, to obtain knowledge data of the code file. When the user edits the code file through the front-end module, the user interaction event generated by the front-end module indicates content that the user edits in the code file. Correspondingly, each of the K plugins determines a latest code file based on the content that the user edits in the code file and the code file before the editing, and analyzes the latest code file, to obtain knowledge data of the latest code file.

In this application, analysis performed by the plugin on the code file may all be considered as static analysis.

In the foregoing solution, each plugin needs to use the knowledge data of the code file in the workspace when developing the application. Therefore, each plugin needs to analyze the code file to obtain the knowledge data. However, the plurality of plugins obtain the same knowledge data by analyzing the same code file, resulting in existence of repeated analysis.

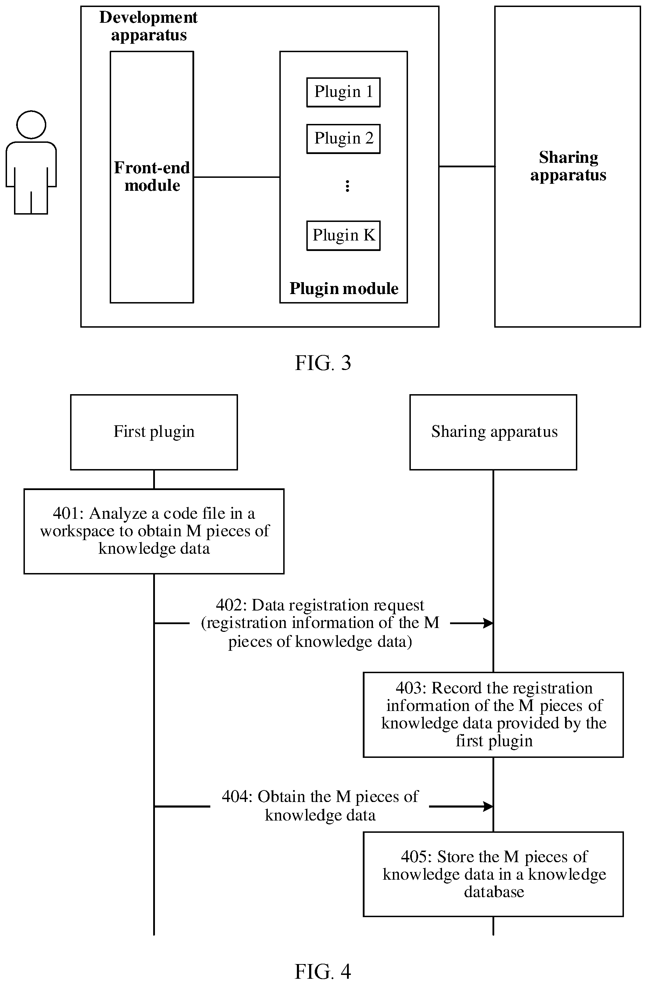

Based on this, this application provides an IDE architecture based on FIG. 2. In comparison with the IDE architecture in FIG. 2, a sharing apparatus is added to the IDE architecture. For a diagram of the IDE architecture provided in this application, refer to FIG. 3. The sharing apparatus is configured to share knowledge data among a plurality of plugins in the plugin module.

The sharing apparatus may be located in a terminal device. Specifically, the sharing apparatus and the development apparatus are located in a same terminal device, or the sharing apparatus and the development apparatus are located in different terminal devices. The sharing apparatus is, for example, a language service plugin in the IDE architecture. In addition, the sharing apparatus may also be located at a remote end, for example, in a server or in an edge device.

Using an example in which the user opens a specific workspace in the front-end module, a user interaction event generated by the front-end module indicates the workspace opened by the user. Correspondingly, the plugin module sequentially loads, based on the user interaction event, the K plugins acting on the workspace. For example, the plugin module sequentially loads a plugin 1 to a plugin K. The plugin 1 first analyzes a code file in the workspace to obtain knowledge data of the code file. The plugin 1 sends the knowledge data of the code file to the sharing apparatus. Any plugin in the plugin 2 to the plugin K does not need to analyze the code file again, and instead, requests the knowledge data of the code file from the sharing apparatus, so that only one plugin in the K plugins acting on the workspace needs to analyze the code file, thereby avoiding repeated analysis and calculation.

Correspondingly, this application provides a knowledge data sharing method. The knowledge data sharing method is applicable to an IDE architecture. The IDE architecture includes a sharing apparatus and a development apparatus. The development apparatus includes a first plugin and a second plugin, and the sharing apparatus is separately connected to the first plugin and the second plugin.

With reference to the diagram of the IDE architecture shown in FIG. 3, for example, the first plugin and the second plugin are respectively the plugin 1 and the plugin 2. For another example, the first plugin and the second plugin are respectively the plugin 1 and the plugin K.

The first plugin and the second plugin may act on a same workspace. The workspace includes a code file of an application that is being developed. It may also be understood that the first plugin and the second plugin may be configured to jointly develop the application. The first plugin can analyze the code file to obtain knowledge data of the code file, synchronize the knowledge data obtained through analysis to the sharing apparatus, and the second plugin can request, from the sharing apparatus, the knowledge data obtained through analysis by the first plugin.

In this application, the first plugin may be understood as a producer of the knowledge data, and the second plugin may be understood as a consumer of the knowledge data. It may also be understood that the first plugin is a production plugin, and the second plugin is a consumption plugin.

The data sharing method provided in this application is described in the following two parts. In the first part, the first plugin provides the knowledge data to the sharing apparatus. In the second part, the second plugin requests the knowledge data from the sharing apparatus.

The first part is explained with reference to the schematic flowchart of providing knowledge data to the sharing apparatus by the first plugin illustrated in FIG. 4.

Step 401: The first plugin analyzes a code file in a workspace to obtain M pieces of knowledge data, where M is a positive integer. For example, the M pieces of knowledge data include one or more of a code index, a static single-assignment, a control flow graph, or a program dependence graph.

In a possible implementation, the first plugin obtains the code file in the workspace, and analyzes the code file to obtain the M pieces of knowledge data. For a specific analysis process, refer to descriptions in the embodiment related to FIG. 1.

Optionally, before step 401, the first plugin first requests to obtain the M pieces of knowledge data from the sharing apparatus, and after determining that the M pieces of knowledge data do not exist in a knowledge database of the sharing apparatus, analyzes the code file to obtain the knowledge data. In a possible implementation, the first plugin sends a data obtaining request to the sharing apparatus. The data obtaining request includes identifiers of the M pieces of knowledge data. Correspondingly, when determining that the M pieces of knowledge data do not currently exist, the sharing apparatus sends a request failure response to the first plugin. After receiving the request failure response, the first plugin analyzes the code file to obtain the M pieces of knowledge data of the code file.

Step 402: The first plugin sends a data registration request to the sharing apparatus, where the data registration request includes registration information of the M pieces of knowledge data provided by the first plugin.

In a possible implementation, after receiving the data registration request, the sharing apparatus may first perform verification and authentication on identity information of a request source (that is, the first plugin), and after determining that the identity information of the first plugin is successfully verified and authenticated, obtain the registration information of the M pieces of knowledge data from the data registration request.

One piece of knowledge data in the M pieces of knowledge data is used as an example for description: The registration information of the knowledge data includes an identifier of the knowledge data. Optionally, the registration information of the knowledge data further includes one or more of a description, a type, and a data structure of the knowledge data. For example, the knowledge data is a control flow graph, and the registration information of the control flow graph includes an identifier "codElf.CFG" of the control flow graph, a description "code control flow graph data" of the control flow graph, a type "CFG" of the control flow graph, and a data structure "point data structure" of the control flow graph. For another example, the knowledge data is a program dependence graph, and the registration information of the program dependence graph includes an identifier "codElf.PDG" of the program dependence graph, a description "code program dependence data" of the program dependence graph, a type "PDG" of the program dependence graph, and a data structure "edge data structure" of the program dependence graph.

It should be noted that a sequence of step 401 and step 402 is not limited. The first plugin may first send the data registration request to the sharing apparatus (that is, perform step 402), and then analyze the code file in the workspace to obtain the knowledge data (that is, perform step 401). Alternatively, the first plugin first performs step 402, and then performs step 401.

Step 403: The sharing apparatus records the registration information of the M pieces of knowledge data provided by the first plugin.

Optionally, data statistics information is included in the sharing apparatus. After obtaining the registration information of the M pieces of knowledge data from the data registration request, the sharing apparatus records the registration information of the M pieces of knowledge data in the data statistics information.

It may be understood that registration information of m pieces of knowledge data is recorded in the data statistics information, and the registration information of the m pieces of knowledge data is provided by one or more production plugins. To be specific, the one or more production plugins include the first plugin, the registration information of the m pieces of knowledge data includes the registration information of the M pieces of knowledge data, and m is an integer greater than or equal to M.

For example, both a plugin A and a plugin B are production plugins. The plugin A sends a data registration request A to the sharing apparatus. The data registration request A includes registration information of knowledge data 1 to knowledge data 10. The sharing apparatus records the registration information of the knowledge data 1 to the knowledge data 10 in the data statistics information. The plugin B sends a data registration request B to the sharing apparatus. The data registration request B includes registration information of knowledge data 11 to knowledge data 20. The sharing apparatus records the registration information of the knowledge data 11 to the knowledge data 20 in the data statistics information. The plugin B is the first plugin.

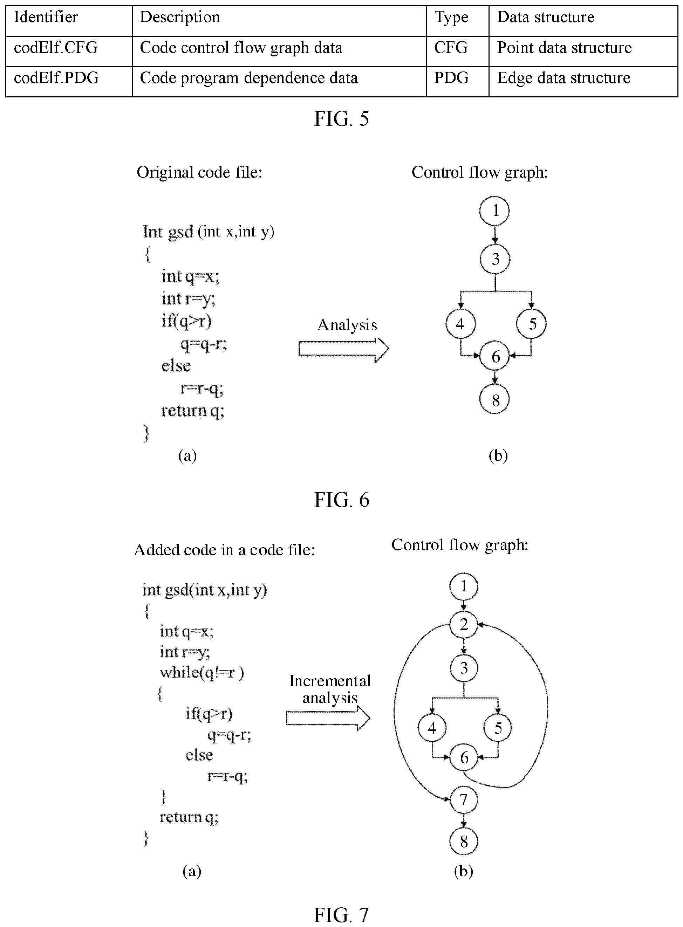

The data statistics information is, for example, a data registry. FIG. 5 is a diagram of an example of a data registry according to this application. The data registry includes registration information of m pieces of knowledge data, for example, includes registration information of a control flow graph and registration information of a program dependence graph. For fields in the registration information, refer to the descriptions in step 402.

Step 404: The sharing apparatus obtains the M pieces of knowledge data from the first plugin.

In a possible implementation, the sharing apparatus obtains/synchronizes the M pieces of knowledge data from the first plugin based on the registration information of the M pieces of knowledge data in the registration request. For example, the sharing apparatus sends a data synchronization request to the first plugin. The data synchronization request includes identifiers of the M pieces of knowledge data. Correspondingly, the first plugin synchronizes the M pieces of knowledge data to the sharing apparatus.

In another possible implementation, the first plugin not only actively sends the data registration request to the sharing apparatus, but also actively sends the M pieces of knowledge data corresponding to the data registration request to the sharing apparatus. In a possible example, when a plugin module loads the first plugin, the first plugin sends the data registration request to the sharing apparatus. When the plugin module calls the first plugin, the first plugin performs static code analysis to generate M pieces of knowledge data, and sends the M pieces of knowledge data to the sharing apparatus.

Step 405: The sharing apparatus stores the M pieces of knowledge data in a knowledge database.

In a possible implementation, the sharing apparatus includes a knowledge database. After receiving the M pieces of knowledge data from the first plugin, the sharing apparatus stores the M pieces of knowledge data of the first plugin in the knowledge database. In this way, m pieces of knowledge data from one or more production plugins are stored in the knowledge database.

It may be understood that there is a correspondence between the knowledge database and the data statistics information. When needing to search for knowledge data, the sharing apparatus may first determine whether registration information of the knowledge data is recorded in the data statistics information, and if determining that the registration information of the knowledge data is recorded in the data statistics information, search the knowledge database for the knowledge data.

Optionally, when storing the knowledge data in the knowledge database, the sharing apparatus may further obtain an address at which the knowledge data is stored in the knowledge database, and then record the address in the data statistics information. If determining that the registration information of the knowledge data is recorded in the data statistics information, the sharing apparatus further obtains the address at which the knowledge data is stored in the knowledge database, and then, obtains the knowledge data from the knowledge database based on the obtained address.

It should be added that the code file may also change. For example, a user makes a modification on content in an original code file on the basis of the original code file. The modification may include adding one or some new code files on the basis of the original code file, modifying code in the code file, deleting a code file or code in a code file, and the like. To ensure that the knowledge data more accurately expresses the changed code file, the first plugin may perform analysis of an increment (which may be referred to as incremental analysis) based on the changed code file, to determine the changed knowledge data.

It may be understood that when the user makes a modification on content in the original code file, the first plugin not only needs to analyze change information of the code file in the workspace, but also needs to perform analysis of an increment on another code file associated with the change information of the code file. For example, the code file includes a code file 1 and a code file 2. The user adds a code file 3 on the basis of the code file 1 and the code file 2, and the code file 3 and the code file 1 may affect each other. Therefore, the first plugin not only needs to analyze the code file 3, but also needs to analyze the code file 1 associated with the code file 3. That is, the first plugin determines that code files that need to be incrementally analyzed include the code file 1 and the code file 3.

In a possible implementation, the first plugin obtains change information of the code file, and determines, based on the change information of the code file, an affected code file (that is, a code file that needs to be incrementally analyzed) in the workspace. The first plugin performs incremental analysis on the affected code file in the workspace, to obtain change information of M' pieces of knowledge data, where M' is a positive integer less than or equal to M. For example, the code file includes a code file 1 and a code file 2, and the first plugin analyzes the code file 1 and the code file 2, to obtain a code index, a static single-assignment, a control flow graph, and a program dependence graph, that is, four pieces of knowledge data. Further, the user adds a code file 3 on the basis of the code file 1 and the code file 2. The first plugin determines, based on the added code file 3, that code files that need to be incrementally analyzed are the code file 1 and the code file 3. Further, the first plugin analyzes the code file 1 and the code file 3 to obtain change information of the code index and change information of the control flow graph, that is, change information of two pieces of knowledge data.

In an implementation of obtaining the change information of the code file by the first plugin, the first plugin may periodically detect whether the change information exists in the current code file. When determining that the change information exists in the current code file, the first plugin determines, based on the change information of the code file, a code file that needs to be incrementally analyzed. Alternatively, after modifying content in the original code file, the user triggers the first plugin to obtain a code file that needs to be incrementally analyzed. That is, the first plugin may further obtain the change information of the code file from the current code file in response to a user instruction.

The first plugin further needs to synchronize the change information of the M' pieces of knowledge data to the sharing apparatus. Optionally, when synchronizing the change information of the knowledge data to the sharing apparatus, the first plugin further includes a change indication in the change information. The change indication indicates that the knowledge data is obtained based on incremental analysis. Optionally, the change indication further indicates an update position when the change information of the knowledge data is updated into the original knowledge data. The sharing apparatus updates the M' pieces of knowledge data currently stored in the knowledge database based on the change information of the M' pieces of knowledge data and M' change indications, to obtain updated M' pieces of knowledge data.

With reference to the foregoing example, the sharing apparatus obtains change information and a change indication of the code index from the first plugin. The sharing apparatus updates, based on the change information and the change indication of the code index, the code index currently stored in the knowledge database. The sharing apparatus further obtains change information and a change indication of the control flow graph from the first plugin. The sharing apparatus updates, based on the change information and the change indication of the control flow graph, the control flow graph currently stored in the knowledge database.

Explanation is made below using the control flow graph as an example.

An original code file obtained by the first plugin is shown in (a) in FIG. 6. The first plugin analyzes the original code file, and an obtained control flow graph is shown in (b) in FIG. 6. Each circle represents a basic block (basic block, BB). A circle 1 represents an input block, a circle 8 represents an output block and a circle 3 represents an if statement. The first plugin sends the obtained control flow graph to the sharing apparatus, and the sharing apparatus stores the control flow graph.

Subsequently, after the user respectively adds two lines of code before the 5^{th} line and the 9^{th} line in the original code file, a modified code file obtained is shown in (a) in FIG. 7. The first plugin performs incremental analysis on the modified code file, and determines change information of the control flow graph as follows: A circle 2 is added before the circle 3, and a circle 7 is added before the circle 8, where the circle 2 represents a while statement, two branches of the circle 2 point to the circle 3 and the circle 7 respectively, and a circle 6 further points to the circle 2. Correspondingly, a control flow graph obtained by the first plugin by performing update based on the change information of the control flow graph is shown in (b) in FIG. 7. The first plugin further sends the change information of the control flow graph to the sharing apparatus, and a control flow graph obtained by the sharing apparatus by performing update based on the change information of the control flow graph is also shown in (b) in FIG. 7.

In addition, in the foregoing step 404, the first plugin may further send change indications of the M pieces of knowledge data to the sharing apparatus. The change indication may indicate whether corresponding knowledge data is obtained based on incremental analysis. For example, the change indication occupies 1 bit (bit). When a value of the change indication is 1, it indicates that the knowledge data corresponding to the change indication is obtained based on incremental analysis. When the value of the change indication is 0, it indicates that the knowledge data corresponding to the change indication is not obtained based on incremental analysis. Correspondingly, when the first plugin synchronizes the M pieces of knowledge data to the sharing apparatus, values of carried change indications of the pieces of knowledge data are 0, and when the first plugin synchronizes the M' pieces of incremental knowledge data to the sharing apparatus, values of carried change indications are 1.

It should be added that the sharing apparatus further has a basic code analysis capability. For example, the sharing apparatus obtains a code file, and performs basic analysis based on the code file to obtain basic data (for example, an abstract syntax tree and a token) of code, and then, the sharing apparatus stores the basic data of the code in a knowledge database.

Further, the sharing apparatus may further obtain an affected code file (that is, a code file that needs to be incrementally analyzed) in the workspace based on the change information of the code file, determine change information of the basic data based on the affected code file in the workspace, and update the basic data in the knowledge database based on the change information of the basic data. When needing to perform analysis, the first plugin can directly obtain latest basic data from the knowledge database, and further analyze the latest basic data to obtain knowledge data.

In this way, a plurality of plugins may obtain the basic data from the sharing apparatus without respectively analyzing the code file to obtain the basic data first, and then analyze the basic data to obtain the knowledge data. This helps to reduce a calculation amount of the plugins.

Optionally, the sharing apparatus may further send description information of the m pieces of knowledge data recorded in the data statistics information to a front-end module. Correspondingly, the front-end module displays the description information of the m pieces of knowledge data.

The description information of the knowledge data is determined by the sharing apparatus based on registration information of the knowledge data. For example, the description information of the knowledge data includes an identifier, a description, a type, and a data structure of the knowledge data.

The description information of the m pieces of knowledge data displayed by the front-end module may be used by the user to select, when developing a third plugin, knowledge data that the third plugin can directly access from the sharing apparatus. It is understood that the sharing apparatus displays, in the front-end module, the description information of the m pieces of knowledge data stored in the knowledge database thereof. In the process of developing the third plugin, the user can learn of which knowledge data can be directly obtained from the knowledge database of the sharing apparatus, and therefore, sets the third plugin to request the knowledge data from the sharing apparatus without analyzing the code file again. This saves computing resources.

Optionally, the user may query, in the front-end module, knowledge data that currently has been registered in the sharing apparatus. Specifically, the front-end module sends a data query request to the sharing apparatus in response to a user instruction. The sharing apparatus sends, based on the data query request, description information of m pieces of knowledge data that currently have been registered in the sharing apparatus to the front-end module, and the front-end module displays the description information of the m pieces of knowledge data. The user selects, from the m pieces of knowledge data based on the description information of the m pieces of knowledge data displayed by the front-end module, knowledge data that the third plugin can directly request from the sharing apparatus, and sets an identifier of the selected knowledge data in configuration of the third plugin.

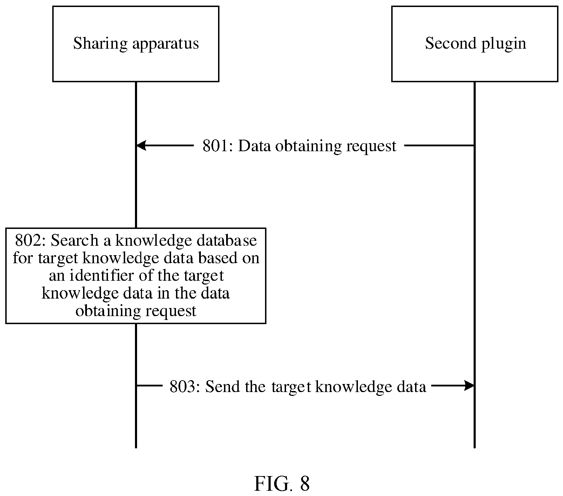

The second part is explained with reference to the schematic flowchart of requesting knowledge data from the sharing apparatus by the second plugin illustrated in FIG. 8.

Step 801: The second plugin sends a data obtaining request to the sharing apparatus, and correspondingly, the sharing apparatus receives the data obtaining request from the second plugin.

In a possible implementation, when acting on a workspace, the second plugin needs to rely on knowledge data (which may be referred to as target knowledge data) of a code file in the workspace. The target knowledge data is, for example, a code index, a static single-assignment, a control flow graph, and a program dependence graph of the code file. Correspondingly, after a user calls the second plugin in a front-end module, the second plugin may request the target knowledge data from the sharing apparatus.

In a possible implementation, the second plugin determines an identifier of the target knowledge data, and has the identifier of the target knowledge data included in the data obtaining request. Correspondingly, the sharing apparatus receives the data obtaining request from the second plugin, and obtains the identifier of the target knowledge data from the data obtaining request.

Step 802: The sharing apparatus searches a knowledge database for the target knowledge data based on the identifier of the target knowledge data in the data obtaining request. The target knowledge data is one of M pieces of knowledge data provided by a first plugin. That is, the target knowledge data is obtained by the first plugin by analyzing a code file.

In a possible implementation, the sharing apparatus determines, based on the identifier of the target knowledge data, whether registration information of the target knowledge data is recorded in data statistics information. For example, if determining that the identifier of the target knowledge data is recorded in the data statistics information, the sharing apparatus determines that the registration information of the target knowledge data is recorded in the data statistics information. If determining that the identifier of the target knowledge data is not recorded in the data statistics information, the sharing apparatus determines that the registration information of the target knowledge data is not recorded in the data statistics information.

After determining that the registration information of the knowledge data is recorded in the data statistics information, the sharing apparatus searches the knowledge database for the target knowledge data. For example, the sharing apparatus obtains the registration information of the target knowledge data from the data statistics information, and searches the knowledge database for the target knowledge data based on an address that is of the target knowledge data and that is recorded in the registration information.

Step 803: The sharing apparatus sends the target knowledge data to the second plugin.

Correspondingly, the second plugin receives the target knowledge data from the sharing apparatus. The second plugin may develop an application based on the target knowledge data without analyzing a code file of the application.

Optionally, after receiving the target knowledge data from the sharing apparatus, the second plugin further sends a subscription request for the target knowledge data to the sharing apparatus. The subscription request is used by the second plugin to obtain change information of the target knowledge data from the sharing apparatus. In a possible implementation, when determining that the code file changes, the first plugin determines change information of the target knowledge data, and sends the change information of the target knowledge data to the sharing apparatus. Correspondingly, the sharing apparatus sends the change information of the target knowledge data to the second plugin.

In addition, when the sharing apparatus does not find the target knowledge data from the knowledge database based on the identifier of the target knowledge data in the data obtaining request, the sharing apparatus may send a request failure response to the second plugin. Correspondingly, after receiving the request failure response, the second plugin analyzes the code file of the application, to obtain knowledge data of the code file. Optionally, the second plugin may further register the knowledge data obtained through analysis with the sharing apparatus. For a specific registration manner, refer to the descriptions in the embodiment related to FIG. 4.

In a possible implementation, the sharing apparatus includes a data registration module, a data upload module, a data query module, a data download module, and a knowledge database.

The data registration module is configured to receive a data registration request from the first plugin. The data registration request includes registration information of M pieces of knowledge data. The registration information of the knowledge data includes, for example, an identifier, a description, a type, and a data structure of the knowledge data. The data registration module is further configured to record the registration information of the M pieces of knowledge data in the registration request in data statistics information. Optionally, the data registration module stores the data statistics information.

The data upload module is configured to obtain, from the first plugin, the M pieces of knowledge data obtained by the first plugin by analyzing the code file of the application, and store the M pieces of knowledge data in the knowledge database.

The data query module is configured to search, based on the data obtaining request from the second plugin, the knowledge database for target knowledge data indicated by an identifier in the data obtaining request.

The data download module is configured to send the target knowledge data to the second plugin.

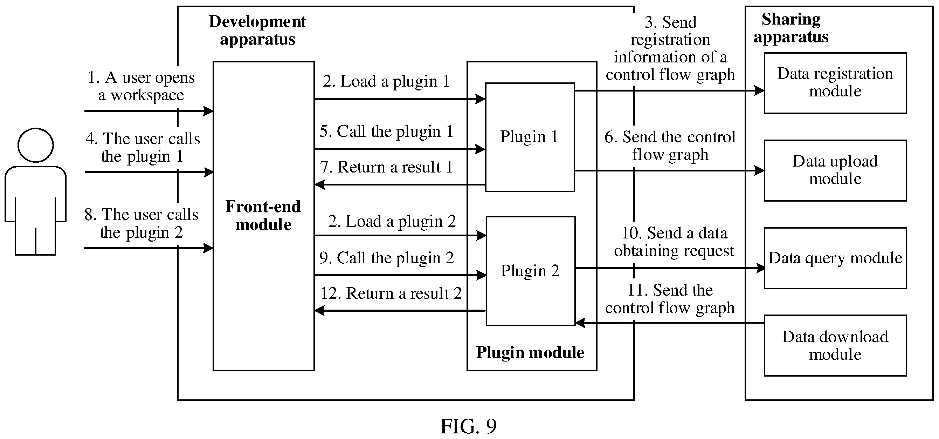

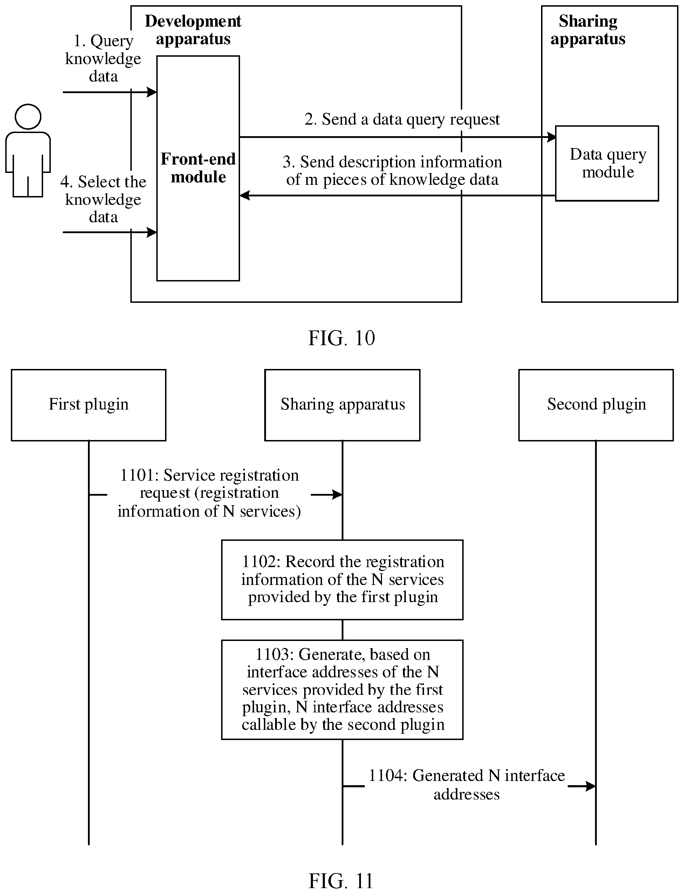

Based on the architecture diagram shown in FIG. 3 and the data registration module, the data upload module, the data query module, and the data download module in the sharing apparatus, FIG. 9 and FIG. 10 respectively provide two possible interaction diagrams of creative commons.

It is pointed out in advance that the first plugin is, for example, a plugin 1, and the second plugin is, for example, a plugin 2. Sequence numbers 1 to 12 in FIG. 9 indicate a sequence of steps. Sequence numbers 1 to 4 in FIG. 10 also indicate a sequence of steps. For content that is not described in detail in FIG. 9 and FIG. 10, refer to the descriptions in the foregoing embodiments related to FIG. 4 to FIG. 8.

In the interaction diagram shown in FIG. 9:
When a user opens a workspace in the front-end module, a plugin module automatically loads the plugin 1 and the plugin 2.

When the plugin module loads the plugin 1, the plugin 1 sends registration information of a control flow graph (that is, an example of knowledge data) to the data registration module. The data registration module stores the registration information of the control flow graph in data statistics information.

Further, when the user calls the plugin 1 in the front-end module, the plugin 1 analyzes a code file to obtain a control flow graph (that is, an example of knowledge data), and the plugin 1 uploads the control flow graph to the data upload module. Correspondingly, the data upload module stores the control flow graph in the knowledge database. In addition, the plugin 1 may further return, to the front-end module, a result 1 obtained by the plugin 1 by executing a service in the plugin 1 based on the control flow graph.

When the user calls the plugin 2 in the front-end module, target knowledge data that the plugin 2 needs to obtain is a control flow graph, and the plugin 2 sends a data obtaining request to the data query module. The data obtaining request includes an identifier (for example, codElf.CFG in FIG. 5) of the control flow graph. Correspondingly, the data query module obtains the control flow graph from the knowledge database based on the identifier of the control flow graph, and sends the control flow graph to the plugin 2. After obtaining the control flow graph, the plugin 2 uses the control flow graph without obtaining a control flow graph by analyzing the code file of the application. In addition, the plugin 2 may further return, to the front-end module, a result 2 obtained by the plugin 2 by executing a service in the plugin 2 based on the control flow graph.

In the interaction diagram shown in FIG. 10:
In a process of developing a third plugin by the user, the front-end module may further send a data query request to the data query module in response to a knowledge data query instruction from the user. The data query module sends, based on the data query request, description information of m pieces of knowledge data to the front-end module, and the front-end module displays the description information of the m pieces of knowledge data. The user may select, based on the description information of the m pieces of knowledge data displayed by the front-end module, knowledge data that the third plugin can directly query in the sharing apparatus, and sets an identifier of the selected knowledge data in configuration of the third plugin.

In addition, this application further provides a service sharing method. The service sharing method is applicable to an IDE architecture. The IDE architecture includes a sharing apparatus and a development apparatus. The development apparatus includes a first plugin and a second plugin. The sharing apparatus is separately connected to the first plugin and the second plugin.

With reference to the diagram of the IDE architecture shown in FIG. 3, for example, the first plugin and the second plugin are respectively the plugin 1 and the plugin 2. For another example, the first plugin and the second plugin are respectively the plugin 1 and the plugin K.

The first plugin and the second plugin may act on a same workspace. The workspace includes a code file of an application that is being developed. It may also be understood that the first plugin and the second plugin may be configured to jointly develop the application. The first plugin may register, with the sharing apparatus, a service that the first plugin can provide. The second plugin can request the sharing apparatus to call the service provided by the first plugin.

In this application, the first plugin may be understood as a producer of the service, and the second plugin may be understood as a consumer of the service. It may also be understood that the first plugin is a production plugin, and the second plugin is a consumption plugin.

The service sharing method provided in this application is described in the following two parts. In the first part, the first plugin provides the service to the sharing apparatus. In the second part, the second plugin requests the service from the sharing apparatus.

The first part is explained with reference to the schematic flowchart of providing a service to the sharing apparatus by the first plugin illustrated in FIG. 11.

Step 1101: The first plugin sends a service registration request to the sharing apparatus. Correspondingly, the sharing apparatus receives the service registration request from the first plugin. The service registration request includes registration information of N services provided by the first plugin.

In a possible implementation, the first plugin determines N services that the first plugin can provide, where N is a positive integer. The service herein may be considered as an atomic service, that is, a minimum and indivisible service that the first plugin can provide. The atomic service may also be referred to as an atomic capability. For example, the N atomic services that the first plugin determines that the first plugin can provide include an automatic code generation service and a code fixing service.

Using one of the N services as an example, registration information of the service includes an identifier and an interface address of the service. The interface address is for calling a service corresponding to the identifier. Optionally, the registration information of the service further includes one or more of a description, a type, a calling parameter, and a returned result of the service.

For example, the service provided by the first plugin is an automatic code generation service. Registration information of the automatic code generation service may include an identifier "codElf.generate" of the automatic code generation service, an interface address "API1" of the automatic code generation service, a description "generate a function-level code snippet" of the automatic code generation service, a type "code generate" of the automatic code generation service, and a calling parameter "cursor position: int: cursor position; code context: JOSN: context of to-be-generated code" of the automatic code generation service, and a returned result "generate: string: generated code snippet; position: int: position at which code is inserted" of the automatic code generation service.

For another example, the service provided by the first plugin is a code fixing service. Registration information of the code fixing service may include an identifier "codElf.fix" of the code fixing service, an interface address "API2" of the code fixing service, a description "fix a code defect" of the code fixing service, a type "code fix" of the code fixing service, a calling parameter "code to be fix: string: to-be-fixed code snippet; code context: JOSN: context of d" of the code fixing service, and a returned result "is fixed: bool: whether fixing is implemented; code after fix: string: fixed code snippet" of the code fixing service.

Step 1102: The sharing apparatus records the registration information of the N services provided by the first plugin.

In a possible implementation, after receiving the service registration request, the sharing apparatus may first perform verification and authentication on identity information of a request source (that is, the first plugin), and after determining that the identity information of the first plugin is successfully verified and authenticated, obtain the registration information of the N services from the service registration request.

Further, service statistics information is included in the sharing apparatus, and the sharing apparatus may record the registration information of the N services in the service statistics information. It may be understood that registration information of n services is recorded in the service statistics information, and the registration information of the n services is provided by one or more production plugins. To be specific, the one or more production plugins include the first plugin, the registration information of the n services includes the registration information of the N services, and n is an integer greater than or equal to N.

For example, both a plugin A and a plugin B are production plugins. The plugin A sends a service registration request A to the sharing apparatus. The service registration request A includes registration information of a service 1 to a service 10. The sharing apparatus records the registration information of the service 1 to the service 10 in the service statistics information. The plugin B sends a service registration request B to the sharing apparatus. The service registration request B includes registration information of a service 11 to a service 20. The sharing apparatus records the registration information of the service 11 to the service 20 in the service statistics information. The plugin B is the first plugin.

Step 1103: The sharing apparatus generates, based on interface addresses of the N services provided by the first plugin, N interface addresses callable by the second plugin.

Still using one of the N services as an example, an interface address of the service provided by the first plugin is specifically an interface address (denoted as a first interface address) used by the sharing apparatus to call the service provided by the first plugin. That is, when the sharing apparatus calls the first interface address, the first plugin may perform an operation corresponding to the service.

Further, the sharing apparatus further needs to generate an interface address (denoted as a second interface address) that corresponds to the first interface address, that is called by the second plugin, and that is in the sharing apparatus.

Step 1104: The sharing apparatus sends the generated N interface addresses (that is, the second interface address) to the second plugin. Correspondingly, the second plugin obtains the N interface addresses generated by the sharing apparatus.

In an example, the sharing apparatus sends an identifier of a service and a second interface address of the service to the second plugin.

In another example, the second plugin may send an interface address query request to the sharing apparatus. The interface address query request includes an identifier of a service, and the sharing apparatus sends a second interface address of the service (or the identifier of the service and the second interface address of the service) to the second plugin based on the identifier of the service.

It may be understood that, when the second plugin needs to use the service, the second plugin may request the sharing apparatus to call the second interface address, and the sharing apparatus calls a first interface address of the first plugin based on a correspondence between the second interface address and the first interface address.

It should be added that the second plugin may further obtain, from the sharing apparatus, a second interface address of a service provided by another production plugin. For example, the second plugin sends an interface address query request to the sharing apparatus, and correspondingly, the second plugin obtains, from the sharing apparatus, identifiers of n services currently registered in the sharing apparatus and second interface addresses of the n services.

In addition, after generating the second interface address of the service, the sharing apparatus may further record the second interface address of the service in the service statistics information.

With reference to the foregoing example, when the service is an automatic code generation service, a first interface address of the automatic code generation service is API1, a second interface address generated by the sharing apparatus and corresponding to API1 is API1-1, and the sharing apparatus records API1-1 in the service statistics information. When the service is a code fixing service, a first interface address of the code fixing service is API2, a second interface address generated by the sharing apparatus and corresponding to API2 is API2-1, and the sharing apparatus records API2-1 in the service statistics information.

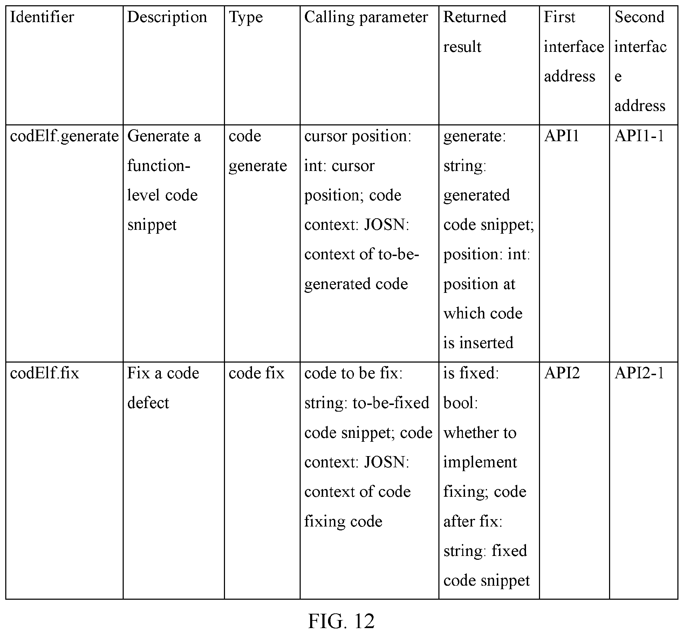

For example, the service statistics information is a service registry. FIG. 12 is a diagram of an example of a service registry according to this application. For example, the service registry includes registration information of an automatic code generation service and a second interface address of the automatic code generation service. The service registry further includes registration information of a code fixing service and a second interface address of the code fixing service. In FIG. 12, for fields in the registration information, refer to descriptions in step 1001.

In a possible implementation, the sharing apparatus may further send description information of the n services in the service statistics information to the second plugin. Optionally, the second plugin sends a service query request to the sharing apparatus, and the sharing apparatus sends the description information of the n services to the second plugin. The second plugin obtains second interface addresses of the n services from the description information of the n services.

Optionally, the sharing apparatus may further send the description information of the n services recorded in the service statistics information to a front-end module. Correspondingly, the front-end module displays the description information of n services.

The description information of the service is determined by the sharing apparatus based on registration information of the service. For example, the description information of the service further includes an identifier, a description, a type, a calling parameter, and a returned result of the service.

The description information of the n services displayed by the front-end module may be used by the user to select, when developing a third plugin, a service that the third plugin can directly call from the sharing apparatus. It is understood that the sharing apparatus may display, in the front-end module, the description information of the n services registered in the sharing apparatus. In the process of developing the third plugin, the user can learn of calling of which services can be directly requested from the sharing apparatus, and therefore, sets the third plugin to call the service from the sharing apparatus without implementing the service in the third plugin. In this way, implementing a same service in a plurality of plugins is avoided, which helps to save computing resources.

Optionally, the user may query, in the front-end module, n services that currently have been registered in the sharing apparatus. Specifically, the front-end module sends a service query request to the sharing apparatus in response to a user instruction. The sharing apparatus sends, based on the service query request, description information of the n services that currently have been registered in the sharing apparatus to the front-end module, and the front-end module displays the description information of the n services. The user selects, from the n services based on the description information of the n services displayed by the front-end module, a service that the third plugin can directly call from the sharing apparatus, and sets an identifier of the selected service in configuration of the third plugin.

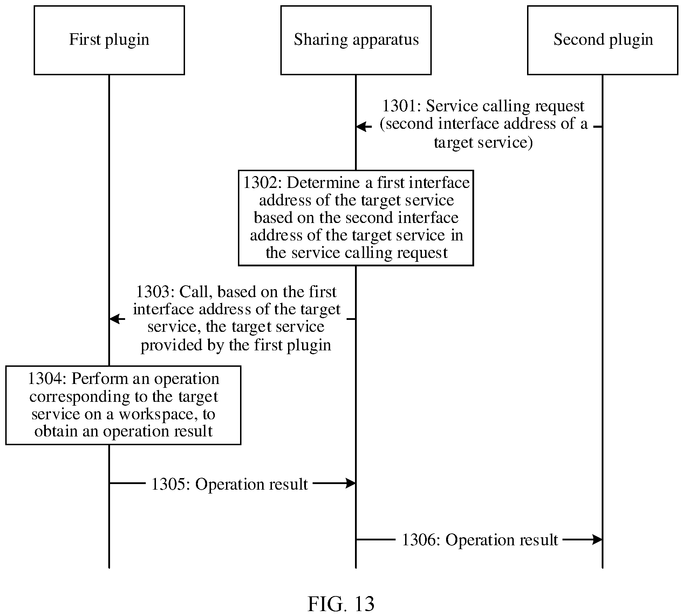

The second part is explained with reference to the schematic flowchart of requesting a service from the sharing apparatus by the second plugin illustrated in FIG. 13.

Step 1301: The second plugin sends a service calling request to the sharing apparatus, and correspondingly, the sharing apparatus receives the service calling request from the second plugin.

In a possible implementation, after a user calls the second plugin in a front-end module, the second plugin sends the service calling request to the sharing apparatus. The service calling request includes a second interface address of a service (denoted as a target service) that the second plugin requests to call. Optionally, the service calling request further includes an identifier of the target service.

With reference to an example related to FIG. 12, the target service is an automatic code generation service, and the second plugin sends a service calling request to the sharing apparatus. The service calling request includes a second interface address "API1-1" of the automatic code generation service, or the service calling request includes an identifier "codElf.generate" and a second interface address "API1-1" of the automatic code generation service.

Step 1302: The sharing apparatus determines a first interface address of the target service based on the second interface address of the target service in the service calling request.

Registration information of n services currently registered and second interface addresses of the n services are recorded in service statistics information of the sharing apparatus. The sharing apparatus searches the service statistics information for registration information of the target service based on the second interface address of the target service, and then, obtains the first interface address of the target service from the registration information of the target service.

It may also be understood that a correspondence between first interface addresses and the second interface addresses of the n services currently registered is recorded in the service statistics information of the sharing apparatus. The sharing apparatus determines, from the service statistics information based on the second interface address of the target service, the first interface address corresponding to the second interface address of the target service.

Step 1303: The sharing apparatus calls, based on the first interface address of the target service, the target service provided by the first plugin.

Step 1304: The first plugin performs an operation corresponding to the target service on the workspace, to obtain an operation result.

For example, the target service is an automatic code generation service, and the first plugin executes the automatic code generation service on the workspace. That is, a performed operation is automatically generating code, and the automatically generated code is an operation result corresponding to the target service.

Step 1305: The first plugin sends the operation result to the sharing apparatus. Correspondingly, the sharing apparatus receives the operation result from the first plugin.

Step 1306: The sharing apparatus sends the operation result to the second plugin.

In a possible implementation, the sharing apparatus includes a service registration module, a service discovery module, and a service calling module.

The service registration module is configured to receive a service registration request from the first plugin. The service registration request includes registration information of N services. Registration information of each service includes, for example, an identifier, an interface address (that is, a first interface address), a description, a type, a calling parameter, and a returned result of the service. The service registration module is further configured to record the registration information of the N services in the service statistics information, generate a second interface address of the service based on the first interface address of the service, and record the second interface address of the service in the service statistics information.

The service discovery module is configured to receive an interface address query request from the second plugin, where the interface address query request includes an identifier of a target service that the second plugin requests to call. The service discovery module is further configured to send the second interface address of the target service to the second plugin based on the identifier of the target service.

The service calling module is configured to receive a service calling request from the second plugin, obtain, from the service calling request, the second interface address of the target service that the second plugin requests to call, determine, from the service statistics information, a first interface address corresponding to the second interface address, and schedule, based on the first interface address, the target service provided by the first plugin.

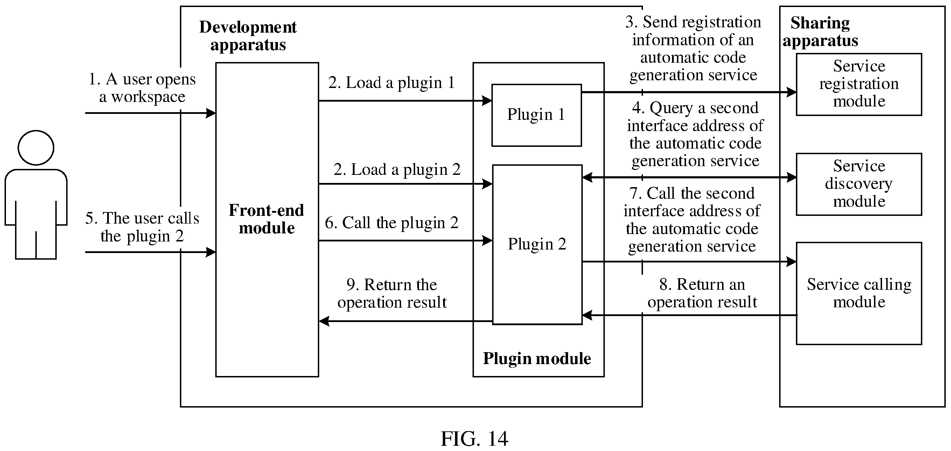

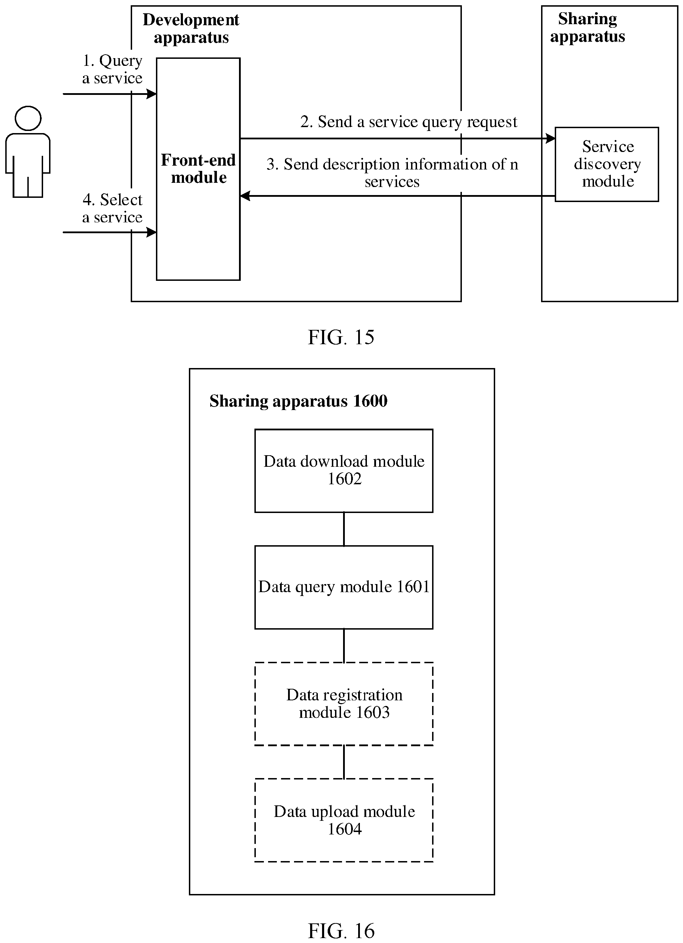

Based on the architectural diagram shown in FIG. 3 and the service registration module, the service discovery module, and the service calling module in the sharing apparatus, FIG. 14 and FIG. 15 respectively provide two possible interaction diagrams of service sharing.

It is pointed out in advance that the first plugin is, for example, a plugin 1, and the second plugin is, for example, a plugin 2. Sequence numbers 1 to 9 in FIG. 14 indicate a sequence of steps. Sequence numbers 1 to 4 in FIG. 15 also indicate a sequence of steps. For content that is not described in detail in FIG. 14 and FIG. 15, refer to the descriptions in the foregoing embodiments related to FIG. 11 to FIG. 13.

In the interaction diagram shown in FIG. 14:
When a user opens a workspace in the front-end module, a plugin module automatically loads the plugin 1 and the plugin 2.

When the plugin module loads the plugin 1, the plugin 1 sends registration information of an automatic code generation service (that is, an example of the service) to the service registration module. Correspondingly, the service registration module stores the registration information of the automatic code generation service in service statistics information.

When the plugin module loads the plugin 2, the plugin 2 sends an interface address query request to the service discovery module. The interface address query request includes an identifier (for example, codElf.generate in FIG. 12) of the automatic code generation service. Correspondingly, the service discovery module determines a second interface address of the automatic code generation service based on an identifier of the automatic code generation service and the service statistics information. The service discovery module returns the second interface address of the automatic code generation service to the second plugin.

When the user calls the plugin 2 in the front-end module, the plugin 2 sends a service calling request to the service calling module. The service calling request includes the second interface address of the automatic code generation service. Correspondingly, the service calling module determines a first interface address corresponding to the second interface address based on the second interface address included in the service calling request, and then calls the automatic code generation service based on the first interface address. The plugin 1 performs an operation corresponding to the automatic code generation service on a codespace, that is, automatically generates code in the codespace. Subsequently, the plugin 1 sends an operation result to the service calling module, the service calling module further sends the operation result to the plugin 2, and the plugin 2 returns the operation result to the front-end module.

In the interaction diagram shown in FIG. 15:
In a process of developing a third plugin by the user, the front-end module may further send a service query request to the service discovery module in response to a service query instruction from the user. The service discovery module sends description information of the n services to the front-end module based on the service query request, and the front-end module displays the description information of the n services. The user may select, based on the description information of the n services displayed by the front-end module, a service that the third plugin can directly call from the sharing apparatus, and sets an identifier of the selected service in configuration of the third plugin.

Based on a same invention concept, this application further provides a sharing apparatus 1600. The sharing apparatus 1600 may be configured to implement the method in the foregoing method embodiments related to FIG. 4 to FIG. 10, that is, to implement knowledge data sharing between plugins. The sharing apparatus 1600 is applicable to an IDE architecture. The IDE architecture includes the sharing apparatus 1600, a first plugin, and a second plugin. The sharing apparatus 1600 is, for example, the sharing apparatus in FIG. 3.

The sharing apparatus 1600 stores M pieces of knowledge data provided by the first plugin, where M is a positive integer.

As shown in FIG. 16, the sharing apparatus 1600 includes:
a data query module 1601, configured to receive a data obtaining request from the second plugin, and search the M pieces of knowledge data for target knowledge data based on the data obtaining request; and
a data download module 1602, configured to send the target knowledge data to the second plugin.

In a possible implementation, the sharing apparatus 1600 further includes a data registration module 1603. Before the data query module 1601 receives the data obtaining request from the second plugin, the data registration module 1603 is configured to receive a data registration request from the first plugin, where the data registration request includes identifiers of the M pieces of knowledge data; and record the identifiers of the M pieces of knowledge data.

In a possible implementation, the sharing apparatus 1600 further includes a data upload module 1604. After the data registration module 1603 records the identifiers of the M pieces of knowledge data, the data upload module 1604 is configured to obtain the M pieces of knowledge data from the first plugin, and store the M pieces of knowledge data. The M pieces of knowledge data are obtained by the first plugin by analyzing a code file in a workspace, or the M pieces of knowledge data are obtained by the first plugin by analyzing basic data. The basic data is obtained by the sharing apparatus 1600 by analyzing a code file in the workspace. The first plugin and the second plugin jointly act on the workspace. The basic data is one or more of an abstract syntax tree and a token sequence. The M pieces of knowledge data include one or more of a code index, a static single-assignment, a control flow graph, or a program dependence graph.

In a possible implementation, after storing the M pieces of knowledge data, the data upload module 1604 is further configured to: obtain change information of M' pieces of knowledge data from the first plugin; and update the M' pieces of knowledge data in the M pieces of knowledge data based on the change information of the M' pieces of knowledge data. The change information of the M' pieces of knowledge data is obtained by the first plugin by performing incremental analysis based on change information of the code file in the workspace, or the change information of the M' pieces of knowledge data is obtained by the first plugin by performing incremental analysis based on change information of the basic data. The change information of the basic data is obtained by the sharing apparatus 1600 by performing incremental analysis based on change information of the code file in the workspace.

In a possible implementation, after sending the target knowledge data to the second plugin, the data download module 1602 is further configured to receive a subscription request from the second plugin for the target knowledge data, where the subscription request is for obtaining change information of the target knowledge data by the second plugin. Correspondingly, after the data upload module 1604 receives the change information of the target knowledge data from the first plugin, the data download module 1602 is further configured to send the change information of the target knowledge data to the second plugin.

In a possible implementation, the sharing apparatus 1600 stores m pieces of knowledge data provided by a production plugin. The production plugin includes the first plugin, and m is a positive integer. In a process of developing, by a user, a third plugin, the data query module 1601 is further configured to send description information of the m pieces of knowledge data to a front-end module, to enable the user to select, from the m pieces of knowledge data based on the description information of the m pieces of knowledge data displayed by the front-end module, knowledge data that is obtainable by the third plugin from the sharing apparatus 1600.

It should be noted that, in another embodiment, the data query module 1601 may be configured to perform any step in the method embodiments related to FIG. 4 to FIG. 10, the data download module 1602 may be configured to perform any step in the method embodiments related to FIG. 4 to FIG. 10, the data registration module 1603 may be configured to perform any step in the method embodiments related to FIG. 4 to FIG. 10, and the data upload module 1604 may be configured to perform any step in the method embodiments related to FIG. 4 to FIG. 10. It may be understood that steps that the data query module 1601, the data download module 1602, the data registration module 1603, and the data upload module 1604 are responsible for implementing may be specified as required. The data query module 1601, the data download module 1602, the data registration module 1603, and the data upload module 1604 respectively implement different steps in the method embodiments related to FIG. 4 to FIG. 10, to implement all functions of the sharing apparatus 1600 in FIG. 16.

Based on a same invention concept, this application further provides a sharing apparatus 1700. The sharing apparatus 1700 may be configured to implement the method in the foregoing method embodiments related to FIG. 11 to FIG. 15, that is, to implement service sharing between plugins. The sharing apparatus 1700 is applicable to an IDE architecture. The IDE architecture includes the sharing apparatus 1700, a first plugin, and a second plugin. The sharing apparatus 1700 is, for example, the sharing apparatus in FIG. 3.

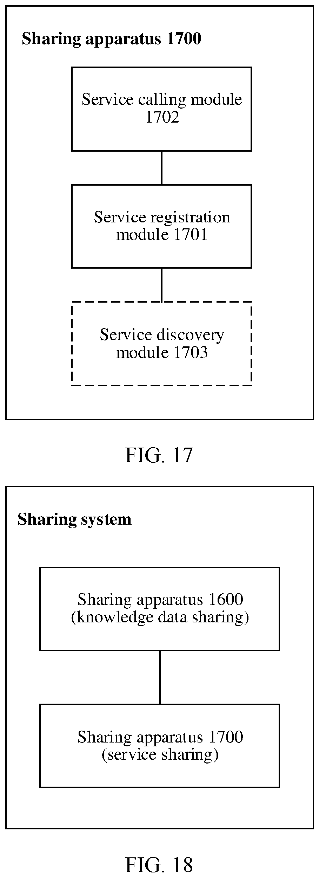

As shown in FIG. 17, the sharing apparatus 1700 includes:
a service registration module 1701, configured to register N services provided by the first plugin, where N is a positive integer; and
a service calling module 1702, configured to receive a service calling request from the second plugin, and call a target service in the N services based on the service calling request.

The service calling module 1702 is further configured to receive an operation result obtained by the first plugin by providing the target service, and send the operation result to the second plugin.

In a possible implementation, the first plugin and the second plugin act on a same workspace, and the operation result is obtained by the first plugin by providing the target service to the workspace.

In a possible implementation, before the service calling module 1702 receives the service calling request from the second plugin, the service registration module 1701 is configured to: receive a service registration request from the first plugin, where the service registration request includes first interface addresses of the N services, and the first interface addresses of the services are used by the sharing apparatus 1700 to call the services; generate second interface addresses of the N services based on the first interface addresses of the N services, where the second interface addresses of the services are used by the second plugin to call the services; and record the first interface addresses and the second interface addresses of the N services.

In a possible implementation, the apparatus further includes a service discovery module 1703, where after the service registration module 1701 records the first interface addresses and the second interface addresses of the N services, the service discovery module 1703 is configured to: receive a service query request from the second plugin, where the service query request includes an identifier of the target service, and the N services include the target service; and send a second interface address of the target service to the second plugin.

In a possible implementation, when calling the target service in the N services based on the service calling request, the service calling module 1702 is specifically configured to: determine a first interface address of the target service based on the second interface address of the target service in the service calling request; and call the target service based on the first interface address of the target service.

In a possible implementation, n services provided by a production plugin are registered in the service registration module 1701. The production plugin includes the first plugin, and n is a positive integer. The sharing apparatus 1700 further includes a service discovery module 1703. In a process of developing, by a user, a third plugin, the service discovery module 1703 is configured to send description information of the n services to a front-end module, to enable the user to select, from the n services based on the description information of the n services displayed by the front-end module, a service that is callable by the third plugin from the sharing apparatus 1700.

It should be noted that, in another embodiment, the service registration module 1701 may be configured to perform any step in the method embodiments related to FIG. 11 to FIG. 15, the service calling module 1702 may be configured to perform any step in the method embodiments related to FIG. 11 to FIG. 15, and the service discovery module 1703 may be configured to perform any step in the method embodiments related to FIG. 11 to FIG. 15. It may be understood that steps that the service registration module 1701, the service calling module 1702, and the service discovery module 1703 are responsible for implementing may be specified as required. The service registration module 1701, the service calling module 1702, and the service discovery module 1703 respectively implement different steps in the method embodiments related to FIG. 11 to FIG. 15, to implement all functions of the sharing apparatus 1700 in FIG. 17.

In the embodiment related to FIG. 16, the data query module 1601, the data download module 1602, the data registration module 1603, and the data upload module 1604 may all be implemented by software or be implemented by hardware. In the embodiment related to FIG. 17, the service registration module 1701, the service calling module 1702, and the service discovery module 1703 may all be implemented by software or be implemented by hardware.

Using the data query module 1601 as an example, an implementation of the data query module 1601 is described below. Similarly, for implementations of the data download module 1602, the data registration module 1603, and the data upload module 1604 in the embodiment related to FIG. 16, refer to the implementation of the data query module 1601. Similarly, for implementations of the service registration module 1701, the service calling module 1702, and the service discovery module 1703 in the embodiment related to FIG. 17, refer to the implementation of the data query module 1601.

The module is as an example of a software functional unit, and the data query module 1601 may include code run on a compute instance. The compute instance may include at least one of a physical host (computing device), a virtual machine, and a container. Further, there may be one or more compute instances. For example, the data query module 1601 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the data query module 1601 may include at least one computing device like a server. Alternatively, the data query module 1601 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

The plurality of computing devices included in the data query module 1601 may be distributed in a same region, or may be distributed in different regions. The plurality of computing devices included in the data query module 1601 may be distributed in a same AZ, or may be distributed in different AZs. Similarly, the plurality of computing devices included in the data query module 1601 may be distributed in a same VPC, or may be distributed in a plurality of VPCs. The plurality of computing devices may be any combination of computing devices such as a server, an ASIC, a PLD, a CPLD, an FPGA, and a GAL.

This application further provides a sharing system. As shown in FIG. 18, the sharing system includes the sharing apparatus 1600 in FIG. 16 and the sharing apparatus 1700 in FIG. 17. It may also be understood that the sharing apparatus 1600 may be configured to implement the method in the foregoing method embodiments related to FIG. 4 to FIG. 10. The sharing apparatus 1700 may be configured to implement the method in the foregoing method embodiments related to FIG. 11 to FIG. 15.

Both the sharing apparatus 1600 and the sharing apparatus 1700 may be implemented by software or may be implemented by hardware. For example, an implementation of the sharing apparatus 1600 is described below. Similarly, for an implementation of the sharing apparatus 1700, refer to the implementation of the sharing apparatus 1600.

The module is as an example of a software functional unit, and the sharing apparatus 1600 may include code run on a compute instance. The compute instance may be at least one of a physical host (computing device), a virtual machine, and a computing device like a container. Further, there may be one or more computing devices. For example, the sharing apparatus 1600 may include code run on a plurality of hosts/virtual machines/containers. It should be noted that the plurality of hosts/virtual machines/containers used to run the application may be distributed in a same region or may be distributed in different regions. The plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same VPC, or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the sharing apparatus 1600 may include at least one computing device like a server. Alternatively, the sharing apparatus 1600 may also be a device implemented by using an ASIC, a PLD, or the like. The PLD may be implemented by a CPLD, an FPGA, a GAL, or any combination thereof.

The plurality of computing devices included in the sharing apparatus 1600 may be distributed in a same region, or may be distributed in different regions. The plurality of computing devices included in the sharing apparatus 1600 may be distributed in a same AZ, or may be distributed in different AZs. Similarly, the plurality of computing devices included in the sharing apparatus 1600 may be distributed in a same VPC, or may be distributed in a plurality of VPCs. The plurality of computing devices may be any combination of computing devices such as a server, an ASIC, a PLD, a CPLD, an FPGA, and a GAL.

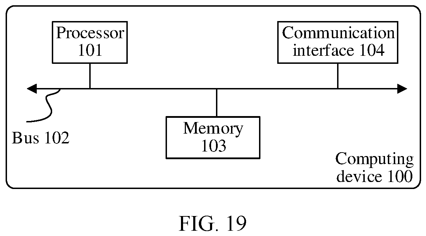

This application further provides a computing device 100. As shown in FIG. 19, the computing device 100 includes a processor 101, a bus 102, a memory 103, and a communication interface 104. The processor 101, the memory 103, and the communication interface 104 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 19 for representation, but it does not mean that there is only one bus or one type of bus. The bus 104 may include a path for transmitting information between components (for example, the memory 103, the processor 101, and the communication interface 104) of the computing device 100.

The processor 101 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 103 may include a volatile memory (volatile memory), for example, a random access memory (random access memory, RAM). The processor 101 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 103 stores executable program code, and the processor 101 executes the executable program code to separately implement functions of the data query module 1601, the data download module 1602, the data registration module 1603, and the data upload module 1604, to implement the method in the method embodiments related to FIG. 4 to FIG. 10. That is, the memory 103 stores instructions for performing the method in the method embodiments related to FIG. 4 to FIG. 10.

Alternatively, the memory 103 stores executable program code, and the processor 101 executes the executable program code to separately implement functions of the service registration module 1701, the service calling module 1702, and the service discovery module 1703, to implement the method in the method embodiments related to FIG. 11 to FIG. 15. That is, the memory 103 stores instructions for performing the method in the method embodiments related to FIG. 11 to FIG. 15.

Alternatively, the memory 103 stores executable program code, and the processor 101 executes the executable program code to separately implement functions of the sharing apparatus 1600 and the sharing apparatus 1700, to implement the method in the method embodiments related to FIG. 4 to FIG. 15. That is, the memory 103 stores instructions for performing the method in the method embodiments related to FIG. 4 to FIG. 15.

The communication interface 104 uses a transceiver module, for example, but not limited to, a network interface card or a transceiver, to implement communication between the computing device 100 and another device or a communication network.

Embodiments of this application further provide a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

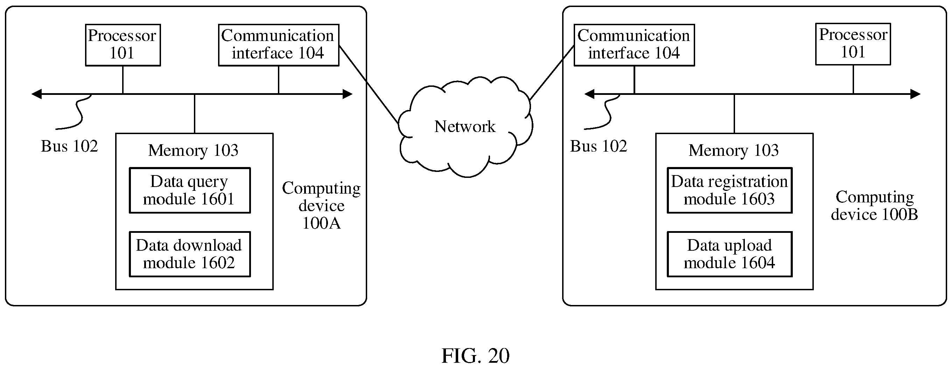

As shown in FIG. 20, the computing device cluster includes at least one computing device 100.

In some possible implementations, memories 103 in one or more computing devices 100 in the computing device cluster may store same instructions for executing the method embodiments related to FIG. 4 to FIG. 10. In some possible implementations, the memories 103 in the one or more computing devices 100 in the computing device cluster may respectively store some instructions for executing the method embodiments related to FIG. 4 to FIG. 10. In other words, the one or more computing devices 100 may be combined to jointly execute the instructions used in the method embodiments related to FIG. 4 to FIG. 10.

Alternatively, the memories 103 in the one or more computing devices 100 in the computing device cluster may store same instructions for executing the method in the method embodiments related to FIG. 11 to FIG. 15. In some possible implementations, the memories 103 in the one or more computing devices 100 in the computing device cluster may respectively store some instructions for executing the method embodiments related to FIG. 11 to FIG. 15. In other words, the one or more computing devices 100 may be combined to jointly execute the instructions used in the method embodiments related to FIG. 11 to FIG. 15.

Alternatively, the memories 103 in the one or more computing devices 100 in the computing device cluster may store same instructions for executing the method in the method embodiments related to FIG. 4 to FIG. 15. In some possible implementations, the memories 103 in the one or more computing devices 100 in the computing device cluster may respectively store some instructions for executing the method embodiments related to FIG. 4 to FIG. 15. In other words, the one or more computing devices 100 may be combined to jointly execute the instructions used in the method embodiments related to FIG. 4 to FIG. 15.

An example in which the computing device cluster is configured to perform the method embodiments related to FIG. 4 to FIG. 10 is used below for description.

Memories 103 in different computing devices 100 in the computing device cluster may store different instructions, and are respectively configured to implement some functions of the sharing apparatus 1600. To be specific, instructions stored in the memories 103 in different computing devices 100 may implement functions of one or more of the data query module 1601, the data download module 1602, the data registration module 1603, and the data upload module 1604.

In some possible implementations, the one or more computing devices in the computing device cluster may be connected over a network. The network may be a wide area network, a local area network, or the like.

FIG. 20 shows a possible implementation. As shown in FIG. 20, two computing devices 100A and 100B are connected over a network. Specifically, the computing devices are connected to the network through communication interfaces of the computing devices. In such possible implementations, the memory 103 in the computing device 100A stores instructions for implementing functions of the data query module 1601 and the data download module 1602. In addition, the memory 103 in the computing device 100B stores instructions for implementing functions of the data registration module 1603 and the data upload module 1604.

It should be understood that functions of the computing device 100A shown in FIG. 20 may alternatively be implemented by a plurality of computing devices 100. Similarly, functions of the computing device 100B may alternatively be implemented by a plurality of computing devices 100.

Embodiments of this application further provide a computer program product including instructions. The computer program product may be a software or program product that includes instructions and that can be run on a computing device or stored in any usable medium. When the computer program product is run on at least one computing device, the at least one computing device is enabled to perform the method in the method embodiments related to FIG. 4 to FIG. 10, or execute the instructions in the method in the method embodiments related to FIG. 11 to FIG. 15, or execute the instructions in the methods in the method embodiments related to FIG. 4 to FIG. 15.

Embodiments of this application further provide a computer-readable storage medium. The computer-readable storage medium may be any usable medium that can be stored by a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a computing device to perform the method in the method embodiments related to FIG. 4 to FIG. 10, or perform the instructions in the method in the method embodiments related to FIG. 11 to FIG. 15, or perform the instructions in the methods in the method embodiments related to FIG. 4 to FIG. 15.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A sharing method, applicable to an integrated development environment IDE architecture, wherein the IDE architecture comprises a sharing apparatus, a first plugin, and a second plugin;
the sharing apparatus stores M pieces of knowledge data provided by the first plugin, and M is a positive integer; and
the method comprises:
receiving, by the sharing apparatus, a data obtaining request from the second plugin;
searching, by the sharing apparatus, the M pieces of knowledge data for target knowledge data based on the data obtaining request; and
sending, by the sharing apparatus, the target knowledge data to the second plugin.

2. The method according to claim 1, wherein before the receiving, by the sharing apparatus, a data obtaining request from the second plugin, the method further comprises:
receiving, by the sharing apparatus, a data registration request from the first plugin, wherein the data registration request comprises identifiers of the M pieces of knowledge data; and
recording, by the sharing apparatus, the identifiers of the M pieces of knowledge data.

3. The method according to claim 2, wherein after the recording, by the sharing apparatus, the identifiers of the M pieces of knowledge data, the method further comprises:
obtaining, by the sharing apparatus, the M pieces of knowledge data from the first plugin; and
storing, by the sharing apparatus, the M pieces of knowledge data, wherein
the M pieces of knowledge data are obtained by the first plugin by analyzing a code file in a workspace, or the M pieces of knowledge data are obtained by the first plugin by analyzing basic data, wherein the basic data is obtained by the sharing apparatus by analyzing a code file in the workspace;
the first plugin and the second plugin jointly act on the workspace;
the basic data is one or more of an abstract syntax tree and a token token sequence; and
the M pieces of knowledge data comprise one or more of a code index, a static single-assignment, a control flow graph, or a program dependence graph.

4. The method according to claim 3, wherein after the storing, by the sharing apparatus, the M pieces of knowledge data, the method further comprises:
obtaining, by the sharing apparatus, change information of M' pieces of knowledge data from the first plugin; and
updating, by the sharing apparatus, the M' pieces of knowledge data in the M pieces of knowledge data based on the change information of the M' pieces of knowledge data, wherein
the change information of the M' pieces of knowledge data is obtained by the first plugin by performing incremental analysis based on change information of the code file in the workspace; or
the change information of the M' pieces of knowledge data is obtained by the first plugin by performing incremental analysis based on change information of the basic data, wherein the change information of the basic data is obtained by the sharing apparatus by performing incremental analysis based on change information of the code file in the workspace.

5. The method according to claim 1, wherein after the sending, by the sharing apparatus, the target knowledge data to the second plugin, the method further comprises:
receiving, by the sharing apparatus, a subscription request from the second plugin for the target knowledge data, wherein the subscription request is for obtaining change information of the target knowledge data; and
after receiving the change information of the target knowledge data from the first plugin, sending, by the sharing apparatus, the change information of the target knowledge data to the second plugin.

6. The method according to any one of claims 1 to 5, wherein the sharing apparatus stores m pieces of knowledge data provided by a production plugin, wherein the production plugin comprises the first plugin, and m is a positive integer; and
in a process of developing, by a user, a third plugin, the method further comprises:
sending, by the sharing apparatus, description information of the m pieces of knowledge data to a front-end module, to enable the user to select, from the m pieces of knowledge data based on the description information of the m pieces of knowledge data displayed by the front-end module, knowledge data that is obtainable by the third plugin from the sharing apparatus.

7. A sharing method, applicable to an integrated development environment IDE architecture, wherein the IDE architecture comprises a sharing apparatus, a first plugin, and a second plugin;
N services provided by the first plugin are registered in the sharing apparatus, and N is a positive integer; and
the method comprises:
receiving, by the sharing apparatus, a service calling request from the second plugin;
calling, by the sharing apparatus, a target service in the N services based on the service calling request;
receiving, by the sharing apparatus, an operation result obtained by the first plugin by providing the target service; and
sending, by the sharing apparatus, the operation result to the second plugin.

8. The method according to claim 7, wherein the first plugin and the second plugin act on a same workspace, and the operation result is obtained by the first plugin by providing the target service to the workspace.

9. The method according to claim 7, wherein before the receiving, by the sharing apparatus, a service calling request from the second plugin, the method further comprises:
receiving, by the sharing apparatus, a service registration request from the first plugin, wherein the service registration request comprises first interface addresses of the N services, and the first interface addresses of the services are used by the sharing apparatus to call the services;
generating, by the sharing apparatus, second interface addresses of the N services based on the first interface addresses of the N services, wherein the second interface addresses of the services are used by the second plugin to call the services; and
recording, by the sharing apparatus, the first interface addresses and the second interface addresses of the N services.

10. The method according to claim 9, wherein after the recording, by the sharing apparatus, the first interface addresses and the second interface addresses of the N services, the method further comprises:
receiving, by the sharing apparatus, a service query request from the second plugin, wherein the service query request comprises an identifier of the target service; and
sending, by the sharing apparatus, a second interface address of the target service to the second plugin.

11. The method according to claim 9, wherein the calling, by the sharing apparatus, a target service in the N services based on the service calling request comprises:
determining, by the sharing apparatus, a first interface address of the target service based on the second interface address of the target service in the service calling request; and
calling, by the sharing apparatus, the target service based on the first interface address of the target service.

12. The method according to any one of claims 7 to 11, wherein n services provided by a production plugin are registered in the sharing apparatus, wherein the production plugin comprises the first plugin, and n is a positive integer; and
in a process of developing, by a user, a third plugin, the method further comprises:
sending, by the sharing apparatus, description information of the n services to a front-end module, to enable the user to select, from the n services based on the description information of the n services displayed by the front-end module, a service that is callable by the third plugin from the sharing apparatus.

13. A sharing apparatus, applicable to an integrated development environment IDE architecture, wherein the IDE architecture comprises the apparatus, a first plugin, and a second plugin;
the apparatus stores M pieces of knowledge data provided by the first plugin, and M is a positive integer; and
the apparatus comprises:
a data query module, configured to receive a data obtaining request from the second plugin, and search the M pieces of knowledge data for target knowledge data based on the data obtaining request; and
a data download module, configured to send the target knowledge data to the second plugin.

14. The apparatus according to claim 13, further comprising a data registration module, wherein
the data registration module is configured to:
before the data query module receives the data obtaining request from the second plugin, receive a data registration request from the first plugin, wherein the data registration request comprises identifiers of the M pieces of knowledge data; and
record the identifiers of the M pieces of knowledge data.

15. The apparatus according to claim 14, further comprising a data upload module, wherein
after the data registration module records the identifiers of the M pieces of knowledge data, the data upload module is configured to obtain the M pieces of knowledge data from the first plugin, and store the M pieces of knowledge data, wherein
the M pieces of knowledge data are obtained by the first plugin by analyzing a code file in a workspace, or the M pieces of knowledge data are obtained by the first plugin by analyzing basic data, wherein the basic data is obtained by the apparatus by analyzing a code file in the workspace;
the first plugin and the second plugin jointly act on the workspace;
the basic data is one or more of an abstract syntax tree and a token token sequence; and
the M pieces of knowledge data comprise one or more of a code index, a static single-assignment, a control flow graph, or a program dependence graph.

16. The apparatus according to claim 15, wherein after storing the M pieces of knowledge data, the data upload module is further configured to:
obtain change information of M' pieces of knowledge data from the first plugin; and
update the M' pieces of knowledge data in the M pieces of knowledge data based on the change information of the M' pieces of knowledge data, wherein
the change information of the M' pieces of knowledge data is obtained by the first plugin by performing incremental analysis based on change information of the code file in the workspace; or
the change information of the M' pieces of knowledge data is obtained by the first plugin by performing incremental analysis based on change information of the basic data, wherein the change information of the basic data is obtained by the apparatus by performing incremental analysis based on change information of the code file in the workspace.

17. The apparatus according to claim 13, wherein after sending the target knowledge data to the second plugin, the data download module is further configured to:
receive a subscription request from the second plugin for the target knowledge data, wherein the subscription request is for obtaining change information of the target knowledge data; and
after the data upload module receives the change information of the target knowledge data from the first plugin, send the change information of the target knowledge data to the second plugin.

18. The apparatus according to any one of claims 13 to 17, wherein the apparatus stores m pieces of knowledge data provided by a production plugin, wherein the production plugin comprises the first plugin, and m is a positive integer; and
in a process of developing, by a user, a third plugin, the data query module is further configured to:
send description information of the m pieces of knowledge data to a front-end module, to enable the user to select, from the m pieces of knowledge data based on the description information of the m pieces of knowledge data displayed by the front-end module, knowledge data that is obtainable by the third plugin from the apparatus.

19. A sharing apparatus, applicable to an integrated development environment IDE architecture, wherein the IDE architecture comprises the apparatus, a first plugin, and a second plugin; and
the apparatus comprises:
a service registration module, configured to register N services provided by the first plugin, wherein N is a positive integer; and
a service calling module, configured to receive a service calling request from the second plugin, call a target service in the N services based on the service calling request, receive an operation result obtained by the first plugin by providing the target service, and send the operation result to the second plugin.

20. The apparatus according to claim 19, wherein the first plugin and the second plugin act on a same workspace, and the operation result is obtained by the first plugin by providing the target service to the workspace.

21. The apparatus according to claim 19, wherein before the service calling module receives the service calling request from the second plugin, the service registration module is configured to:
receive a service registration request from the first plugin, wherein the service registration request comprises first interface addresses of the N services, and the first interface addresses of the services are used by the apparatus to call the services;
generate second interface addresses of the N services based on the first interface addresses of the N services, wherein the second interface addresses of the services are used by the second plugin to call the services; and
record the first interface addresses and the second interface addresses of the N services.

22. The apparatus according to claim 21, further comprising a service discovery module, wherein
after the service registration module records the first interface addresses and the second interface addresses of the N services, the service discovery module is configured to:
receive a service query request from the second plugin, wherein the service query request comprises an identifier of the target service; and
send a second interface address of the target service to the second plugin.

23. The apparatus according to claim 21, wherein when calling the target service in the N services based on the service calling request, the service calling module is specifically configured to:
determine a first interface address of the target service based on the second interface address of the target service in the service calling request; and
call the target service based on the first interface address of the target service.

24. The apparatus according to any one of claims 19 to 23, wherein n services provided by a production plugin are registered in the service registration module, wherein the production plugin comprises the first plugin, and n is a positive integer; and
the apparatus further comprises the service discovery module, wherein
in a process of developing, by a user, a third plugin, the service discovery module is configured to:
send description information of the n services to a front-end module, to enable the user to select, from the n services based on the description information of the n services displayed by the front-end module, a service that is callable by the third plugin from the apparatus.

25. A computing device cluster, comprising at least one computing device, wherein each computing device comprises a processor and a memory, wherein
the processor of the at least one computing device is configured to execute instructions stored in the memory of the at least one computing device, to enable the computing device cluster to perform the method according to any one of claims 1 to 6 or enable the computing device cluster to perform the method according to any one of claims 7 to 12.

26. A computer program product, comprising instructions, wherein when the instructions are run by a computing device cluster, the computing device cluster is enabled to perform the method according to any one of claims 1 to 6, or the computing device cluster is enabled to perform the method according to any one of claims 7 to 12.

27. A computer-readable storage medium, comprising computer program instructions, wherein when the computer program instructions are executed by a computing device cluster, the computing device cluster is enabled to perform the method according to any one of claims 1 to 6, or the computing device cluster is enabled to perform the method according to any one of claims 7 to 12.

28. A sharing system, comprising the apparatus according to any one of claims 13 to 18, and the apparatus according to any one of claims 19 to 24.
